# DEMANDE DE BREVET EUROPEEN

(11) **EP 4 290 647 A2**
(43) Date de publication de la demande: **13.12.2023**
(21) Numéro de dépôt: 23177317.7
(22) Date de dépôt: 05.06.2023
(51) Int. Cl.: H01M 10/42, H01M 10/48, H01M 50/569, H01M 50/256, H01M 50/264, H01M 50/298, H01M 50/519, G01R 31/36, H01R 12/00

(54) **DISPOSITIF DE CONNEXION DE CELLULES DE BATTERIE AVEC UN BANC D'ESSAI**

(30) Priorité: 10.06.2022 FR 2205607; 23.09.2022 FR 2209647
(71) Demandeur: Creatique Technologie, 62138 Billy-Berclau (FR)
(72) Inventeur: Vasseur, Stéphane, 46300 Gourdon (FR)
(74) Mandataire: RVDB

(57) **Abrégé**

La présente invention concerne un dispositif (1) de connexion de cellules de batteries avec un banc d'essai, ledit dispositif (1) comprenant une première partie (11) munie d'une première interface (111) de connexion et des moyens d'assemblage (112) avec ledit banc, et une deuxième partie (12) présentant une deuxième interface (121) de connexion compatible avec ladite première interface (111), ladite deuxième partie (12) comportant des moyens de réception (122) desdites cellules de batteries, ladite première partie (11) et ladite deuxième partie (12) étant configurés de sorte que ladite première interface (111) et ladite deuxième interface (121) s'assemblent de manière amovible par emboîtement.

## Description

### Domaine technique

La présente invention concerne le domaine de l'outillage électrique industriel pour les batteries électriques.

Par batterie électrique au sens de la présente invention, on entend ici un pack, les modules qui le forme, et les cellules de batterie qui en sont l'élément de base.

L'objet de la présente invention porte plus particulièrement sur un dispositif permettant de créer une liaison électrique fiable, aisément maintenable et compacte pour des niveaux courants forts entre un banc et une ou plusieurs cellule(s) de batterie lors des phases de tests, de formage, d'épreuve, de production, de contrôle, de vieillissement, ou de gestion de fin de vie.

### Art antérieur

Une batterie de véhicule électrique ou hybride, par exemple une batterie de voiture ou de camion, est un ensemble composé d'éléments appelés cellules. Chaque cellule peut être considérée comme une petite batterie. Les pôles de ces cellules sont reliés aux pôles généraux de la batterie pour obtenir la puissance voulue.

Pour des raisons de contrôle qualité et de sécurité, toutes les cellules doivent être éprouvées, contrôlées, formées (premiers cycles charge/décharge) avant d'être implantées dans une batterie.

Il est par exemple possible, dans des applications de laboratoire, de concevoir un produit de contrôle dédié, configuré pour effectuer une connexion électrique avec une cellule de manière à réaliser un contrôle manuel de la cellule.

Ce principe présente plusieurs défauts majeurs pour une utilisation à une échelle industrielle en phase de conception, d'industrialisation, de production ou de recyclage, par exemple sur une ligne de production :
- leur utilisation est à réserver à du personnel habilité à la manipulation de produit sous tension ;
- la mise en place est fastidieuse et nécessite un savoir faire (par exemple respecter des couples de serrage précis) pour garantir le bon fonctionnement sans détériorer la cellule ou le produit de contrôle ;
- le volume nécessaire n'est pas optimisé vis-à-vis de la fonction accomplie.

D'autres produits de contrôle permettent de réaliser cette connexion de façon plus industrielle à l'aide, notamment, de contacts à ressorts, lesquels permettent d'effectuer une connexion électrique de manière simplifiée.

Ces produits se présentent sous forme de « barre de contacts » sous lesquelles sont pressées des cellules. En d'autres termes, le produit de contrôle correspond à une barre sensiblement longitudinale, laquelle présente une pluralité de contacts à ressort. La connexion électrique entre la barre de contacts et les cellules se fait par simple pression des cellules contre la barre de contacts, de sorte que chaque pôle de chaque cellule soit mis en contact avec un contact à ressort.

L'emploi de barres de contacts permet de connecter plusieurs cellules simultanément, à une cadence appropriée pour une ligne de production et/ou pour des tests à échelle industrielle. Les barres de contacts sont conçues de manière à faire partie intégrante d'une machine de production de cellules, chaque barre de contacts étant assemblée avec la machine de production par une pluralité de câbles permettant d'établir une connexion électrique, ce qui induit des contraintes de production, parmi lesquelles :
- la position des contacts est fixe. Dans le cas d'un changement de production, il faut démonter une partie de la machine et décâbler les barres de contacts pour les remplacer par des barres adaptées à la nouvelle production. Toute modification sur la production des cellules implique par conséquent de démonter intégralement la portion de la machine recevant les barres de contacts afin de les échanger ;
- les contacts à ressort sont des pièces d'usure et ne peuvent être changés qu'en démontant et décâblant la barre de contacts de la machine de production, l'accessibilité des contacts dans la machine pour leur maintenance ou remplacement est donc difficile.
- à chaque opération de maintenance ou de changement de production, le câblage entre la barre de contacts et la machine de production doit être défait et refait, ce qui multiplie les risques d'erreur de câblage, de mauvais serrage, ou toute autre erreur d'assemblage de la barre de contacts, pouvant aller jusqu'à créer, par exemple, des risques de départs de feu.

De plus, le fonctionnement des cellules demande généralement une température contrôlée lors des cycles de travail. Or, les barres de contacts sont en général des pièces ajourées. Elles n'isolent donc pas du tout la zone de travail des cellules qui doit être maintenue à une température donnée. Cela induit dans le meilleur des cas, une surconsommation des matériels destinés à maintenir la température de cette zone en augmentant son volume.

Pour ces raisons, le Demandeur soumet que les solutions de l'art antérieur ne sont pas pleinement satisfaisantes car celles-ci ne sont pas adaptées à l'environnement existant.

### Résumé de l'invention

La présente invention vise à améliorer la situation décrite ci-dessus.

Un des objectifs de la présente invention est de remédier aux différents inconvénients mentionnés ci-dessus en proposant un dispositif apte à créer une liaison électrique fiable, aisément maintenable et compacte pour des niveaux courants forts entre un banc et une ou plusieurs cellule(s) de batterie lors des phases de tests, de formage ou d'épreuves A cet effet, l'objet de la présente invention concerne selon un premier aspect un dispositif de connexion de cellule(s) de batterie avec un banc d'essai.

Avantageusement, le dispositif comprend une première partie munie d'une première interface de connexion et des moyens d'assemblage avec le banc, la première interface présentant deux faces, les moyens d'assemblage étant configurés pour réaliser une connexion entre une première face de la première interface et le banc.

Avantageusement, le dispositif comprend une deuxième partie présentant une deuxième interface de connexion compatible avec une deuxième face de la première interface, la deuxième partie comportant des moyens de réception des cellules de batteries, les moyens de réception définissant une zone de réception des cellules.

Avantageusement, la première partie et la deuxième partie sont configurés de sorte que la deuxième interface s'assemble de manière amovible par emboîtement sur la deuxième face de la première interface.

On comprend ici que la première partie est configurée pour s'assembler à un banc d'essai de manière permanente ou semi-permanente, tandis que la deuxième partie s'assemble à la première partie de manière amovible *via* les première et deuxième interfaces.

Par banc d'essai au sens de la présente invention, on entend ici et dans toute la description qui suit un banc configuré pour la réalisation d'une ou plusieurs opérations de tests, de formage, d'épreuve, de production, de contrôle, de vieillissement, ou de gestion de fin de vie, lorsque le banc est relié à une cellule de batterie. Le banc d'essai correspond par exemple à un banc de formage.

Cette conception permet ainsi de connecter les cellules de batterie au banc d'essai, les cellules de batterie étant reçues selon la zone de réception par les moyens de réception, de manière à établir une connexion entre les cellules de batterie et la deuxième partie, la deuxième partie étant connectée à la première partie *via* les première et deuxièmes interfaces, et la première partie étant assemblée avec le banc d'essai.

Bien évidemment, le dispositif est dimensionné de manière appropriée aux cellules de batterie à tester et/ou au banc d'essai, c'est-à-dire qu'il est par exemple capacitaire pour de hauts niveaux de courant (la demande aujourd'hui se rapproche des 300A et est anticipée en hausse, le dispositif étant par exemple capacitaire pour une valeur majorée, par exemple 500A) et dimensionné pour opérer de manière fiable et sécuritaire, tout en conservant ses caractéristiques électriques dans le temps.

Le dispositif est également configuré pour être employé sur un banc d'essai, c'est-à-dire potentiellement sur une ligne de production, son opération ne détériore donc pas les cellules connectées.

On comprend en outre que l'emboîtement amovible de la première partie avec la deuxième partie permet de retirer la deuxième partie afin de réaliser des opérations d'entretien, en particulier au niveau de la zone de réception des cellules, ou encore d'échanger la deuxième partie pour une autre deuxième partie présentant différents moyens de réception des cellules ou adaptée à la circulation d'un courant d'intensité différente. La deuxième face de la première interface est également exposée s'il est nécessaire d'en effectuer l'entretien. Le dispositif présente donc une maintenance simplifiée et est compatible avec des changements de production.

Grâce à la présente invention, le dispositif effectue une connexion entre un banc d'essai et des cellules de batteries, notamment pour le lancement de phases de test, de formage ou d'épreuve, dans lesquelles un courant fort circule à travers la cellule et le dispositif. Le dispositif est par conséquent adapté pour un fonctionnement sur une ligne de production, c'est-à-dire à échelle industrielle, et le caractère amovible de la deuxième partie permet d'effectuer les opérations d'entretien, de maintenance ou de changement de production, sans nécessiter un démontage complet du système. La simplification de ces opérations, et le fonctionnement par simple emboîtement des interfaces de connexion, résulte également en une réduction des erreurs de câblage.

Dans un mode de réalisation avantageux de la présente invention, les moyens de réception comprennent une pluralité de contacts à ressort configurés pour réaliser une connexion électrique entre la deuxième partie et les cellules, les première et deuxième interfaces comprenant une pluralité de contacts pour courant fort reliés aux contacts à ressort.

Par courant fort au sens de la présente invention, on comprend ici et dans toute la description qui suit un courant adapté aux essais des cellules de batterie, par exemple un courant avoisinant - à date de l'invention - 300A. Les contacts pour courant fort correspondent donc à des éléments des interfaces de connexion, le courant fort circulant des contacts à ressort vers la première partie, jusqu'au banc d'essai auquel le dispositif est assemblé. La deuxième partie intègre par exemple une pluralité de câbles également dimensionnés pour le passage d'un courant fort, reliant les contacts à ressort aux contacts pour courant fort de la deuxième interface.

Ainsi, les cellules peuvent être pressées contre les contacts à ressort pour terminer la liaison électrique entre le banc d'essai et les cellules, de manière similaire au fonctionnement des systèmes actuels de production connus de l'homme du métier. La deuxième partie comprend par exemple deux contacts à ressort par cellule à recevoir, correspondant aux pôles électriques de la cellule.

L'homme du métier comprend en outre que les contacts à ressort correspondent à des pièces d'usure, lesquelles sont aisément accessibles en raison de leur disposition sur la deuxième partie amovible vis-à-vis du banc d'essai. Les contacts à ressort peuvent donc facilement être remplacés en cas d'usure, ou encore échangés pour adapter la deuxième partie à la circulation d'un courant différent. L'emploi de contacts à ressort garantit également la circulation du courant dans les cellules de batterie sans les détériorer.

Dans un mode de réalisation additionnel, les moyens de réception comprennent une pluralité de capteurs configurés pour effectuer une mesure de paramètres des cellules et/ou du banc, les première et deuxième interfaces comprenant au moins un contact pour courant faible relié aux capteurs.

L'homme du métier comprend ici qu'une pluralité de tests parallèles à l'essai des cellules peuvent être effectués tout en requérant la circulation d'un faible courant entre le banc et les cellules. Par exemple, un contrôle de la tension des circuits électriques réalisés, durant les essais des cellules, permet d'assurer la fiabilité des autres mesures électriques. Ce contrôle de tension permet notamment de prévenir de l'apparition du vieillissement d'un composant. Selon encore un exemple, la pluralité de capteurs contient un capteur de température, de manière à contrôler la température des cellules de batterie lors des essais et repérer par exemple une surchauffe ou un manque d'isolation du banc d'essai.

De préférence, la deuxième partie comporte une carte électronique, la pluralité de capteurs étant reliée au contact pour courant faible *via* la carte électronique.

On comprend ici que la carte électronique permet de centraliser une variété d'opérations nécessitant le passage d'un faible courant et effectuées au niveau de la zone de réception des cellules, la carte électronique pouvant être alimentée par un câble unique requérant un seul contact pour courant faible sur les première et deuxième interfaces. Cette conception permet ainsi de simplifier le câblage requis pour l'installation du dispositif sur un banc d'essai, et la conception des interfaces de connexion par la disposition d'un contact pour courant faible unique pour l'alimentation de la carte électronique, en remplacement d'une pluralité de contacts individuellement reliés au banc d'essai.

Dans encore un mode de réalisation, les moyens de réception comprennent au moins un port d'aspiration de gaz, les première et deuxième interfaces comprenant au moins un contact pneumatique relié au port.

On comprend ici que cette conception permet l'aspiration de gaz généré dans l'environnement des cellules, en particulier de gaz nocifs potentiellement dégagés durant les cycles de travail des cellules ou en cas de disfonctionnement des cellules.

Dans un mode de réalisation spécifique, les moyens d'assemblage comprennent une pluralité de câbles.

On comprend ici que la première partie est configurée pour être reliée au banc d'essai *via* la pluralité de câbles, de manière à assurer la connexion, électrique ou autre, du dispositif avec le banc d'essai, en adaptant le dispositif aux interfaces spécifiques du banc d'essai. En particulier, la conception en deux parties du dispositif résulte en une opération unique de câblage de la première partie sur le banc d'essai, la deuxième partie étant assemblée de manière amovible sans employer de câble.

Dans un autre mode de réalisation pouvant être combiné avec les modes précédents, le dispositif comprend des moyens de guidage en précision de l'assemblage des première et deuxième interfaces.

De préférence, les moyens de guidage en précision comprennent une vis d'approche réalisant un guidage d'un mouvement d'approche de l'assemblage des première et deuxième interfaces selon un système vis-écrou.

On comprend ici que le système vis-écrou apporte une sécurité supplémentaire en effectuant un maintien en position de l'assemblage par emboîtement des interfaces.

L'emploi d'une vis d'approche permet en outre d'assurer un emboîtement en précision, de sorte que la deuxième partie soit approchée de la première partie jusqu'à engagement de la vis d'approche dans l'écrou associé, l'emboîtement étant alors finalisé par actionnement de la vis d'approche.

On comprend en outre que les moyens de guidage en précision peuvent être réalisés selon d'autres formes connues de l'homme du métier, par exemple par l'emploi d'une vis à bille ou d'un vérin à vitesse variable, de manière à assurer l'approche sécurisée des interfaces.

Dans un mode de réalisation spécifique, la deuxième partie comprend au moins un support s'étendant selon une direction longitudinale et configuré pour s'insérer dans une glissière du banc d'essai, la deuxième interface s'étendant selon un plan orthogonal à la direction longitudinale.

En d'autres termes, le dispositif d'interconnexion de cellule(s) de batterie selon la présente invention, en particulier la deuxième partie du dispositif, se présente sous la forme d'un tiroir venant coulisser dans des glissières du banc d'essai, par exemple au-dessus de la zone de travail des cellules (zone dans laquelle la connexion des cellules est réalisée).

Ainsi, on obtient d'une part une première partie, servant d'interconnexion, fixée dans le banc et reliée électriquement à l'armoire électrique du banc, d'autre part un tiroir qui s'insère dans les glissières du banc et est poussé manuellement jusqu'à atteindre l'interconnexion fixe. Dans encore un mode de réalisation, la deuxième partie comporte un corps creux formant une enveloppe externe de la deuxième partie, le corps creux présentant une façade configurée pour former un négatif du banc.

On comprend ici que le corps creux renferme les composants électroniques de la deuxième partie et que la façade du corps creux correspond à la portion exposée du corps creux lorsque la deuxième partie est assemblée sur le banc d'essai. Le dispositif est ainsi dimensionné de manière à venir compléter le profil du banc d'essai, en particulier de manière à former une façade unie par opposition aux barres de contact ajourées connues de l'homme du métier. Cette conception permet par conséquent de réaliser un assemblage entre le dispositif et le banc d'essai limitant les échanges thermiques des cellules avec le reste du banc d'essai et l'environnement extérieur lors de leurs phases d'essai.

Un deuxième aspect de la présente invention concerne un banc d'essai pour cellules de batterie, le banc comprenant une armoire électrique et un dispositif selon le premier aspect de l'invention.

Avantageusement, l'armoire électrique est connectée à la première face de la première interface du dispositif, et la deuxième partie du dispositif est reçue par le banc de manière amovible, de sorte que, lorsque le banc reçoit la deuxième partie, le banc et le dispositif définissent un espace de réception des cellules.

En d'autres termes, la première partie du dispositif est assemblée au banc d'essai de manière permanente ou semi-permanente, de manière à établir une connexion entre la première face de la première interface avec l'armoire électrique du banc. La connexion est par exemple effectuée par câblage *via* les moyens d'assemblage.

Le banc d'essai reçoit ainsi la deuxième partie du dispositif de manière amovible selon l'emboîtement des interfaces de connexion du dispositif, la deuxième partie du dispositif pouvant être retirée de manière simplifiée pour tout échange ou entretien. Lorsque la deuxième partie du dispositif est assemblée sur le banc d'essai, le dispositif et le banc d'essai définissent un espace de réception des cellules, correspondant à la disposition, vis-à-vis du banc d'essai, de la zone de réception des cellules de la deuxième partie.

Dans un mode de mise en oeuvre, le banc comprend une glissière venant recevoir le dispositif par translation le long de la glissière.

Le dispositif présente par exemple le support décrit ci-avant, la translation du dispositif s'effectuant selon la direction longitudinale du support dans la glissière. Le dispositif et le banc présentent donc une conception conjointe, la deuxième partie du dispositif étant par exemple articulée comme un tiroir du banc d'essai.

Dans un mode de mise en oeuvre additionnel, le banc comprend un volet actionnable entre une position ouverte et une position fermée, la position ouverte libérant le dispositif et l'espace de réception, le volet en position fermée venant recouvrir au moins partiellement le dispositif et l'espace de réception.

De préférence, le volet en position fermée vient recouvrir l'espace de réception de manière à former une enceinte hermétique des cellules.

Ainsi, une fois la deuxième partie du dispositif assemblée sur le banc d'essai et les cellules de batterie pressées au niveau de la zone de réception, le volet peut être refermé sur le dispositif et l'espace de réception, verrouillant l'assemblage. La formation d'une enceinte hermétique permet de réduire les transferts de chaleur entre les cellules et l'environnement extérieur, facilitant le contrôle de la température de l'environnement de travail des cellules sans nécessiter un contrôle total de l'environnement du banc d'essai.

Un troisième aspect de la présente invention concerne l'utilisation d'un banc selon le deuxième aspect de l'invention pour le test de cellules de batteries automobiles.

On comprend ici que le test de cellules de batteries correspond à l'ensemble des opérations communément effectuées à l'aide d'un banc d'essai, notamment de manière à éprouver, contrôler, et former chaque cellule, ou plus généralement selon toute autre opération listée ci-avant employant un banc d'essai.

L'homme du métier comprend additionnellement que l'utilisation dans le cadre des cellules de batteries automobiles correspond à un dimensionnement du banc et du dispositif selon un gabarit connu de cellules de batterie, ainsi que selon une gamme connue d'intensités de courant électrique. Les cellules de batterie automobiles peuvent aussi bien être employées dans des batteries de véhicules automobiles que de camions ou autres véhicules plus lourds, par l'emploi d'un nombre additionnel de cellules similaires.

### Description des figures

D'autres caractéristiques et avantages de la présente invention ressortiront de la description ci-dessous, en référence aux figures annexées [Fig.1], [Fig.2], [Fig.3], [Fig.4] et [Fig. 5] qui en illustrent un exemple de réalisation dépourvu de tout caractère limitatif et sur lesquelles :
[Fig. 1]

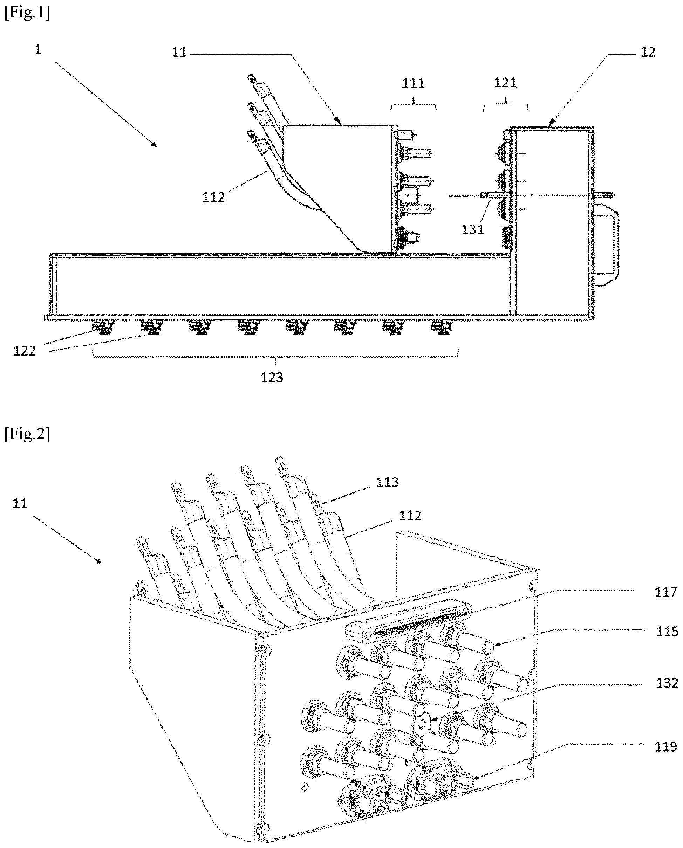

   La figure 1 représente schématiquement une vue de profil d'un dispositif de connexion de cellules de batteries avec un banc d'essai selon un exemple de réalisation de la présente invention ;
[Fig. 2]
   La figure 2 représente une vue en perspective d'une première partie d'un dispositif conforme à la figure 1 ;
[Fig. 3]

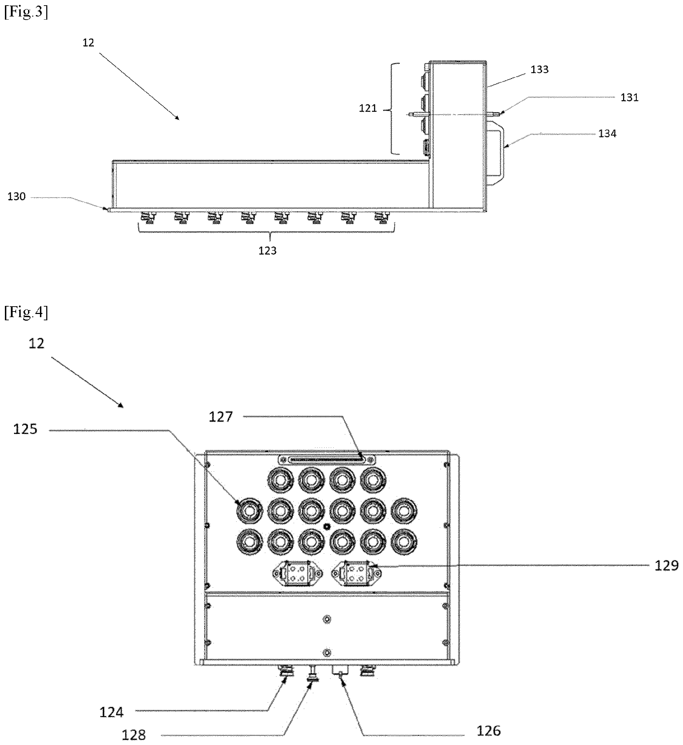

   La figure 3 représente une vue de profil d'une deuxième partie d'un dispositif conforme à la figure 1 ;
[Fig. 4]
   La figure 4 représente une vue de face d'une deuxième partie conforme à la figure 3 ; et
[Fig. 5]

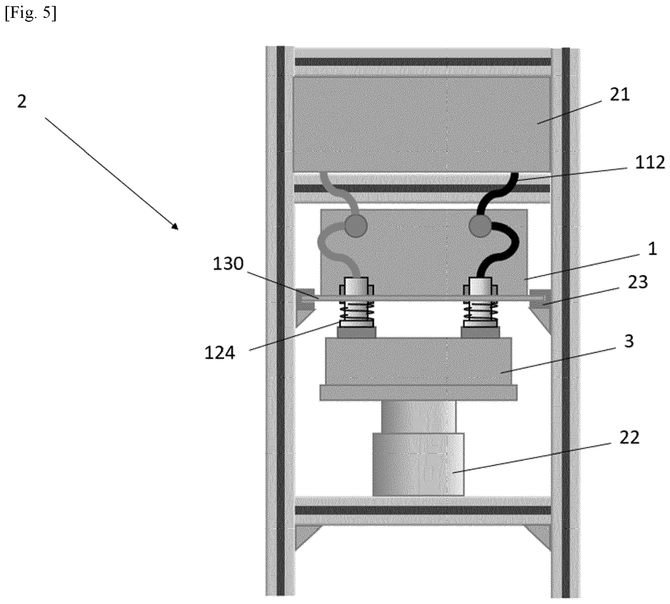

   La figure 5 représente un banc d'essai recevant un dispositif conforme à la figure 1 et une cellule de batterie.

### Description détaillée

Un dispositif de connexion de cellule(s) de batterie avec un banc d'essai selon un exemple de réalisation de la présente invention, ainsi qu'un banc d'essai intégrant un tel dispositif, vont maintenant être décrits dans ce qui va suivre en référence conjointement aux figures 1 à 5. Pour rappel, un des objectifs de la présente invention consiste à permettre la réalisation d'essais sur des cellules de batteries, notamment des étapes d'épreuve, de contrôle et de formage, à une échelle adaptée à une production industrielle et selon des moyens limitant les contraintes de maintenance et de changement de production.

Ceci est rendu possible dans l'exemple décrit ci-après.

Comme illustré en figure 1 et 5, il est prévu dans l'exemple décrit ici un dispositif 1 de connexion pour un banc 2 de formage pour huit cellules 3 de batterie, le dispositif 1 prenant avantageusement la forme d'un tiroir. Le dispositif 1 est par exemple dimensionné pour son utilisation avec des cellules de batteries automobiles, par exemple à l'intérieur d'une chaîne de production de cellules de batteries automobiles.

Ce dispositif 1 comporte deux parties :
- une première partie 11, illustrée en figure 2 et aussi appelée interconnexion, la première partie 11 étant équipée de moyens d'assemblage 112 permettant de fixer et connecter la première partie 11 avec le banc 2 de manière permanente ou semi-permanente, par exemple une pluralité de câbles dont les extrémités 113 (figure 2) permettent de fixer les câbles sur une armoire électrique 21 (figure 5) du banc 2 par vissage ; et
- une deuxième partie 12, illustrée en figure 3 et 4 et aussi appelée tiroir, qui, elle, est assemblée de manière amovible avec la première partie 11 afin de faciliter sa connexion et déconnexion vis-à-vis du banc 2.

Dans ce même exemple, la première partie 11 est munie d'une première interface 111 et la deuxième partie 12 est munie d'une deuxième interface 121, les deux interfaces 111, 121 étant configurées pour s'emboîter de manière à connecter la première partie 11 et la deuxième partie 12. La première partie 11 réalise par conséquent une interconnexion entre le banc 2 et la deuxième partie 12.

La première interface 111 reçoit par exemple les moyens d'assemblage 112, c'est-à-dire ici la pluralité de câbles, selon une première face, et la deuxième interface 121 selon une deuxième face opposée à la première face.

Dans cet exemple, l'interconnexion reçoit les options nécessaires au fonctionnement du banc 2. En d'autres termes, la première partie 11 et les moyens d'assemblage 112 sont conçus de manière complémentaire au banc 2 d'essai, permettant de fixer la première partie 11 au banc 2 d'essai en établissant une connexion, par exemple une connexion électrique et/ou pneumatique, en fonction des différents moyens du banc 2 d'essai. Cette conception conjointe, laquelle s'étend également à la deuxième partie 12 par l'assemblage des deux parties 11, 12, permet au dispositif 1 d'assurer l'ensemble des opérations pour lesquelles le banc 2 d'essai est configuré, c'est-à-dire ici le formage des cellules 3.

La deuxième partie 12 est en outre munie d'une pluralité de moyens de réception 122 de cellules de batteries, lesquels définissent une zone de réception 123 des cellules 3. La zone de réception 123 est bien évidemment dimensionnée en fonction des cellules 3 à recevoir *via* le dispositif 1, en particulier le positionnement des différents moyens de réception 122 et leur espacement.

On comprend ici que les moyens de réception 122 sont configurés pour recevoir mécaniquement les cellules 3 et établir une connexion entre les cellules 3 et la deuxième partie 12, c'est-à-dire par extension entre les cellules 3 et le banc 2 d'essai lorsque le dispositif 1 est assemblé sur le banc 2 d'essai. Les moyens de réception 122 sont ainsi connectés à la deuxième interface 121 *via* la structure interne de la deuxième partie 12. En d'autres termes, la deuxième partie 12 présente un corps creux, définissant son enveloppe externe et ici sa forme de tiroir, le corps creux renfermant un câblage reliant la deuxième interface 121 aux moyens de réception 122. Le corps creux de la deuxième partie 12 définit également sa forme de tiroir, et par extension celle du dispositif 1.

Ainsi, dans l'exemple des figures 2 à 4, il est prévu seize contacts pour courants forts 115, 125 permettant une liaison électrique des huit cellules, un ensemble de trente-six contacts pour faibles courants 117, 127 permettant le contrôle des cycles de formage (comme la température, la mesure de la tension...) et des contacts pneumatiques 119, 129 pour assurer une aspiration d'éventuels gaz nocifs émanant des cellules pendant le cycle.

Dans l'exemple décrit ici, la deuxième partie 12 est alors équipée de :
- seize contacts pour courants forts 125 reliés individuellement à seize contacts à ressort 124, par exemple par des fils de 70mm² dimensionnés pour permettre le passage de 300A en continu entre la deuxième interface 121 et les cellules, le dimensionnement des fils étant bien évidemment fonction de l'ampérage du courant à faire circuler ;
- huit ports d'aspiration 128, ou ventouses d'aspiration, reliées à des contacts pneumatiques 129 pour assurer l'aspiration de gaz nocifs potentiellement dégagés par les cellules durant le cycle de travail ; et
- huit capteurs de températures 126 contrôlant l'état des cellules durant les cycles de travail et reliés aux contacts pour faible courant 127.

On comprend ici que les contacts à ressort 124 présentent les avantages connus de l'homme du métier et permettent la réception des cellules 3 par pression des cellules 3 contre les contacts à ressort 124. Leur disposition sur la zone de réception 123 de la deuxième partie 12 amovible vis-à-vis de la première partie 11 et du banc 2 facilite également le remplacement des contacts à ressort 124 usés, en retirant la deuxième partie 12 pour son entretien. Optionnellement, la deuxième partie 12 comprend également des capteurs de mesure du courant, dits capteurs Sens (non illustrés ici), disposés au niveau de la zone de réception 123, les capteurs Sens étant reliés aux contacts pour faible courant 127 de manière à mesurer la tension des cellules 3 pendant les cycles de travail, c'est-à-dire à effectuer une mesure en parallèle de la tension des cellules 3 pour assurer le bon fonctionnement des contacts à ressort 124. On prévoit par exemple un total de seize capteurs Sens pour huit cellules 3.

Bien évidemment, on comprend ici que de nombreuses combinaisons entre les contacts à ressort 124 et/ou les capteurs de température 126 et/ou les ports d'aspiration 128 et/ou les capteurs Sens peuvent être réalisées selon les fonctionnalités du banc 2 d'essai et les caractéristiques des cellules 3. La deuxième partie 12 fait par exemple partie d'un ensemble de deuxièmes parties interchangeables, par exemple d'un kit compatible avec la première partie 11, l'adaptation du dispositif 1 au changement des contraintes de production s'effectuant par échange de la deuxième partie 12 avec une autre deuxième partie compatible avec une nouvelle ligne de production. Le caractère amovible de la deuxième partie 12 facilite en particulier cette conception.

Selon encore une variante, la deuxième partie 12 intègre une carte électronique reliée d'une part à un contact pour courant faible 127 de la deuxième interface 121, d'autre part à une pluralité de capteurs 126. La carte électronique est alors alimentée par le banc 2 d'essai et contrôle la pluralité de capteurs 126, de manière à décorréler le nombre de capteurs 126 du nombre de contacts pour courant faible 117, 127. Cette conception limite également le nombre de contacts pour courant faible 117, 127 à disposer sur les interfaces 111, 121 et de moyens d'assemblage 112, et permet d'augmenter les fonctionnalités du banc 2 d'essai sans en changer la conception, par association avec une deuxième partie 12 dotée d'une carte électronique spécifique.

Dans l'exemple décrit ici et comme illustré en figure 2 et 3, la première partie 11 possède également, au centre de la première interface 111, un écrou 132 et la deuxième partie 11 possède une vis d'approche 131, formant des moyens de guidage en précision 131, 132 selon un système vis-écrou permettant le vissage de la deuxième partie 12 sur la première partie 11. La vis d'approche 131 traverse avantageusement la deuxième partie 12, de la deuxième interface 121 jusqu'à une façade 133 de la deuxième partie 12.

Lors de l'assemblage du dispositif 1, la deuxième partie 12 est ainsi approchée de la première partie 11 jusqu'à engagement de la vis d'approche 131 dans l'écrou 132, le système vis-écrou effectuant alors un guidage en précision et à vitesse limitée de l'assemblage des interfaces 111, 121.

La vis d'approche 131 permet donc de finaliser le mouvement d'approche et de verrouiller la deuxième partie 12 sur la première partie 11.

Le mouvement d'approche est également facilité selon la conception de la deuxième partie 12, c'est-à-dire sa forme de tiroir, en particulier sa conception conjointe à la géométrie du banc 2 d'essai.

Selon l'exemple de la figure 3, la deuxième partie 12 comprend un support 130, par exemple une plaque de base en aluminium, lequel présente une forme longitudinale qui permet de l'insérer dans une forme complémentaire du banc 2, correspondant selon la figure 5 à des guides ou une glissière 23.

La direction longitudinale du support 130 définit alors le mouvement de translation de la deuxième partie 12 et de la deuxième interface 121 lors de son emboîtement avec la première interface 111. Par extension, la deuxième interface 121 s'étend de manière sensiblement orthogonale à la direction longitudinale du support 130, de manière à permettre l'engagement des contacts 125, 127, 129 lors du mouvement longitudinal.

Dans ce même exemple, on prévoit également des moyens de préhension 134, par exemple des poignées, disposées en façade 133 de la deuxième partie 12, la façade 133 correspondant alors à la portion extrémale de la deuxième partie 12 selon la direction longitudinale, et opposée à la deuxième interface 121. Les moyens de préhension 134 permettent ainsi d'assembler et de désassembler la première partie 11 et la deuxième partie 12.

Avantageusement, la façade 133 est également dimensionnée de manière à former un négatif du banc 2 d'essai auquel le dispositif 1 est associé, en particulier lorsque la deuxième partie 12 est assemblée à la première partie 11, c'est-à-dire ici lorsque le « tiroir » est refermé. En d'autres termes, la deuxième partie 12 vient compléter la forme du banc 2 d'essai de manière à former une enceinte contenant les cellules. La façade 133 est avantageusement pleine et unie de manière à correctement isoler une telle enceinte de l'environnement extérieur et conserver les cellules dans une température contrôlée.

On comprend ici que la conception du dispositif 1 est complémentaire de celle du banc 2 d'essai, de manière à assurer un assemblage fonctionnel du dispositif 1 et du banc 2 d'essai. La présente invention concerne ainsi également un banc 2 d'essai comprenant le dispositif 1, par exemple le banc 2 d'essai de la figure 5.

Un tel banc 2 d'essai comprend une armoire électrique 21 à laquelle la première partie 11 est fixée *via* les moyens d'assemblage 122. La deuxième partie 12 intègre alors le banc 2 d'essai par assemblage sur la première partie 11, de manière à permettre la réception des cellules 3 sur la zone de réception 123. Avantageusement, et en accord avec la description ci-avant, le support 130 de la deuxième partie 12 vient coulisser sur une glissière 23 du banc 2 d'essai. Le banc 2 d'essai et le dispositif 1 définissent ainsi un espace de réception des cellules 3, correspondant à une zone de travail des cellules 3, c'est-à-dire un espace dans lequel les cellules 3 viennent être pressées contre la zone de réception 123 pour les opérations d'épreuve, de contrôle et de formage. Le banc 2 comprend par exemple un vérin 22 venant presser les cellules 3 contre la zone de réception 123.

Avantageusement, le banc 2 d'essai et le dispositif 1 présentent une conception conjointe permettant de définir et délimiter l'espace de réception des cellules 3, en particulier de permettre une isolation thermique de la zone de travail. Selon un exemple de réalisation, le banc 2 d'essai comprend ainsi un volet (non illustré ici) actionnable entre une position ouverte et une position fermée. Lorsque le volet est ouvert, la deuxième partie 12 du dispositif 1 et/ou les cellules 3 sont accessibles et peuvent être échangées, le volet venant recouvrir au moins partiellement le dispositif 1. Le volet est par exemple disposé de manière à former une continuité de la façade 133 de la deuxième partie 12 lorsque le dispositif 1 est assemblé sur le banc 2 d'essai et le volet est refermé. En accord avec la conception de la figure 5, on prévoit par exemple un volet recouvrant intégralement la section du banc 2 disposée sous l'armoire électrique 21, ou encore un volet disposé dans la continuité de la glissière 23 et du support 130. Cette continuité permet alors de rendre l'espace de réception des cellules 3 hermétique, et donc d'améliorer l'isolation thermique de l'environnement des cellules 3 lors de leurs cycles de travail.

Ainsi, la présente invention porte sur un dispositif de connexion de cellules de batterie avec un banc d'essai, ainsi que sur un banc d'essai intégrant un tel dispositif, le dispositif présentant une conception partiellement amovible permettant d'accéder facilement aux pièces d'usure employées durant les essais des cellules, ainsi que d'échanger rapidement les pièces d'usure ou même la portion amovible du dispositif, de manière à adapter rapidement le banc d'essai aux changements et aléas d'une ligne de production.

Il devra être observé que cette description détaillée porte sur plusieurs exemples de réalisation particuliers de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Dispositif (1) de connexion de cellules (3) de batterie avec un banc (2) d'essai, ledit dispositif comprenant :
- une première partie (11) munie d'une première interface (111) de connexion et des moyens d'assemblage (112) avec ledit banc (2), ladite première interface (111) présentant deux faces, lesdits moyens d'assemblage (112) étant configurés pour réaliser une connexion entre une première face de ladite première interface (111) et ledit banc (2) ; et
- une deuxième partie (12) présentant une deuxième interface (121) de connexion compatible avec une deuxième face de ladite première interface (111), ladite deuxième partie (12) comportant des moyens de réception (122) desdites cellules (3) de batteries, lesdits moyens de réception (122) définissant une zone de réception (123) desdites cellules,
ladite première partie (11) et ladite deuxième partie (12) étant configurés de sorte que ladite deuxième interface (121) s'assemble de manière amovible par emboîtement sur ladite deuxième face de ladite première interface (111).

2. Dispositif (1) selon la revendication 1, dans lequel lesdits moyens de réception (122) comprennent une pluralité de contacts à ressort (124) configurés pour réaliser une connexion électrique entre ladite deuxième partie (12) et lesdites cellules, lesdites première et deuxième interfaces (111, 121) comprenant une pluralité de contacts pour courant fort (115, 125) reliés auxdits contacts à ressort (124).

3. Dispositif (1) selon la revendication 1 ou 2, dans lequel lesdits moyens de réception (122) comprennent une pluralité de capteurs (126) configurés pour effectuer une mesure de paramètres desdites cellules (3) et/ou dudit banc (2), lesdites première et deuxième interfaces (111, 121) comprenant au moins un contact pour courant faible (117, 127) relié auxdits capteurs (126).

4. Dispositif (1) selon la revendication 3, dans lequel ladite deuxième partie (12) comporte une carte électronique, ladite pluralité de capteurs (126) étant reliée audit contact pour courant faible (127) *via* ladite carte électronique.

5. Dispositif (1) selon l'une des revendications 1 à 4, dans lequel lesdits moyens de réception (122) comprennent au moins un port (128) d'aspiration de gaz, lesdites première et deuxième interfaces (111, 121) comprenant au moins un contact pneumatique (119, 129) relié audit port (128).

6. Dispositif (1) selon l'une des revendications 1 à 5, dans lequel lesdits moyens d'assemblage (112) comprennent une pluralité de câbles.

7. Dispositif (1) selon l'une des revendications 1 à 6, lequel comprend des moyens de guidage en précision (131, 132) dudit assemblage desdites première et deuxième interfaces (111, 121).

8. Dispositif (1) selon la revendication 7, dans lequel lesdits moyens de guidage en précision (131, 132) comprennent une vis d'approche (131) réalisant un guidage d'un mouvement d'approche dudit assemblage desdites première et deuxième interfaces (111, 121), selon un système vis-écrou.

9. Dispositif (1) selon l'une des revendications 1 à 8, dans lequel ladite deuxième partie (12) comprend au moins un support (130) s'étendant selon une direction longitudinale et configuré pour s'insérer dans une glissière (23) dudit banc (2) d'essai, ladite deuxième interface (121) s'étendant selon un plan orthogonal à ladite direction longitudinale.

10. Dispositif (1) selon l'une des revendications 1 à 9, dans lequel ladite deuxième partie (12) comporte un corps creux formant une enveloppe externe de ladite deuxième partie (12), ledit corps creux présentant une façade (133) configurée pour former un négatif dudit banc (2).

11. Banc (2) d'essai pour cellules (3) de batterie, ledit banc (2) comprenant une armoire électrique (21) et un dispositif (1) selon l'une des revendications 1 à 10, ladite armoire électrique (21) étant connectée à ladite première face de ladite première interface (111) dudit dispositif (1), ladite deuxième partie (12) dudit dispositif (1) étant reçue par ledit banc (2) de manière amovible, de sorte que, lorsque ledit banc (2) reçoit ladite deuxième partie (12), ledit banc (2) et ledit dispositif (1) définissant un espace de réception desdites cellules (3).

12. Banc (2) selon la revendication 11, lequel comprend une glissière (23) venant recevoir ledit dispositif (1) par translation le long de ladite glissière (23).

13. Banc (2) selon la revendication 11 ou 12, lequel comprend un volet actionnable entre une position ouverte et une position fermée, ladite position ouverte libérant ledit dispositif (1) et ledit espace de réception, ledit volet en position fermée venant recouvrir au moins partiellement ledit dispositif (1) et ledit espace de réception.

14. Banc (2) selon la revendication 13, dans lequel ledit volet en position fermée vient recouvrir ledit espace de réception de manière à former une enceinte hermétique desdites cellules (3).

15. Utilisation d'un banc (2) selon l'une des revendications 11 à 14 pour le test de cellules (3) de batteries automobiles.
